# EUROPEAN PATENT APPLICATION

(11) **EP 3 892 456 A1**
(43) Date of publication of application: **13.10.2021**
(21) Application number: 19894141.1
(22) Date of filing: 02.12.2019
(51) Int. Cl.: B32B 3/24, B32B 27/00

(54) **REINFORCING SHEET AND REINFORCING STRUCTURE**

(30) Priority: 07.12.2018 JP 2018229779
(71) Applicant: Nitto Denko Corporation, Ibaraki-shi Osaka 567-8680 (JP)
(72) Inventor: FUJII, Hiroki, Ibaraki-shi, Osaka 567-8680 (JP); KATO, Naoto, Ibaraki-shi, Osaka 567-8680 (JP); SUZUKI, Hideyuki, Ibaraki-shi, Osaka 567-8680 (JP)
(74) Representative: SSM Sandmair
(86) International application number: PCT/JP2019/047057
(87) International publication number: WO 2020/116400

(57) **Abstract**

A reinforcement sheet 1 is stuck onto a metal panel. The reinforcement sheet 1 includes a resin layer 3 and a constraining layer 4 disposed on one side of the resin layer 3 in the thickness direction. The reinforcement sheet 1 extends in a first direction and a second direction. An outer circumferential edge on one side of the reinforcement sheet 1 in the first direction has a curved shape protruding toward the one side in the first direction.

## Description

### TECHNICAL FIELD

The present invention relates to a reinforcement sheet and a reinforcement structure. In particular, the present invention relates to a reinforcement sheet stuck onto a product in various industries to reinforce the product, and a reinforcement structure using the reinforcement sheet.

### BACKGROUND ART

Conventionally, it has been known to stick a reinforcement sheet onto a metal panel of a transportation vehicle such as a car, a railway vehicle, a ship, or an airplane, or of an attached structure such as a door for home to reinforce the vehicle or the structure (for example, see Patent Document 1 below).

Patent Document 1 describes a steel-plate reinforcement sheet including: a resin layer consisting of a steel-plate-reinforcement resin composition containing epoxy resin, acrylonitrile-butadiene rubber, a curing agent, and a blowing agent; and a reinforcement layer.

In the reinforcement sheet of Patent Document 1, the epoxy resin is cured by heating at a high temperature, thereby sticking the reinforcement sheet onto an adherend (a steel plate).

### Citation List

### Patent Document

Patent Document 1: Japanese Unexamined Patent Publication No. 2005-139218

### SUMMARY OF THE INVENTION

### PROBLEM TO BE SOLVED BY THE INVENTION

However, in the reinforcement sheet of Patent Document 1, the resin layer shrinks while being heated and cured and the shrink causes the strain of the metal panel.

Recently particularly, instead of the steel plate, an aluminum plate or a thin steel plate has sometimes been used as the metal plate to reduce the weight. Such a metal panel is particularly ease to strain.

Further, electrodeposition coating is carried out after the reinforcement sheet is stuck onto a metal panel, for example, used in a transportation vehicle. That is, a step of immersing the metal panel onto which the reinforcement sheet is stuck into an electrodeposition solution, a step of removing the metal panel from the solution, and a step of drying the metal panel are carried out. At the time, the solution is often collected in a stepped portion between the reinforcement sheet and the metal panel, specifically, on the upper edge surface of the reinforcement sheet. When the collected solution is solidified, the film thickness becomes uneven.

The present invention provides a reinforcement sheet and reinforcement structure that suppress the strain of the metal panel and are suitable for electrodeposition coating.

### MEANS FOR SOLVING THE PROBLEM

The present invention [1] includes a reinforcement sheet stuck onto a metal panel and comprising: a resin layer; and a constraining layer disposed on one side of the resin layer in a thickness direction, the reinforcement sheet extending in a first direction and a second direction orthogonal to the first direction, wherein an outer circumferential edge on the one side of the reinforcement sheet in the first direction has a curved shape protruding toward the one side in the first direction.

The present invention [2] includes the reinforcement sheet described in [1] above, having an approximately elliptical shape or an approximately circular shape.

The present invention [3] includes the reinforcement sheet described in [2] above, having an approximately elliptical shape.

The present invention [4] includes the reinforcement sheet described in any one of the above-described [1] to [3], having a through hole penetrating in the thickness direction.

The present invention [5] includes the reinforcement sheet described in [4], having a through hole overlapping a center when being projected in the thickness direction.

The present invention [6] includes the reinforcement sheet described in [4], having a plurality of the through holes.

The present invention [7] includes the reinforcement sheet described in [6], wherein the through holes are formed only in a central region.

The present invention [8] includes a reinforcement structure, comprising: the reinforcement sheet described in any one of the above-described [1] to [7]; and a metal panel disposed while being in contact with the resin layer of the reinforcement sheet.

### EFFECTS OF THE INVENTION

The reinforcement sheet of the present invention includes an outer circumferential edge on one side in a first direction. The outer circumferential edge has a curved shape protruding toward the one side. Thus, when the reinforcement sheet is stuck onto a metal panel, the strain of the metal panel is suppressed. Further, the one side in the first direction is turned upward and the reinforcement sheet is stuck onto the metal panel, and electrodeposition coating is carried out. Then, the electrodeposition solution on one edge surface of the reinforcement sheet in the first direction flows down along the shape of the outer circumferential edge toward the other side in the first direction. Thus, the collection of the solution on the one edge surface in the first direction is suppressed. Therefore, the reinforcement sheet is suitable for electrodeposition coating.

In the reinforcement structure of the present invention, the strain is suppressed and the strength is improved. Further, the reinforcement structure is suitable for electrodeposition coating.

### BRIEF DESCRIPTION OF THE DRAWINGS

[FIG. 1] FIG. 1A and FIG. 1B illustrate a reinforcement sheet of a first embodiment of the present invention. FIG. 1A is a plan view. FIG. 1B is a cross-sectional view taken along line A-A of FIG. 1A.
[FIG. 2] FIG. 2 is a perspective view showing a car panel structure including the reinforcement sheet of FIG. 1.
[FIG. 3] FIG. 3A to FIG. 3C are cross-sectional views of the car panel structure of FIG. 2.
FIG. 3A illustrates a state before the resin layer is cured. FIG. 3B illustrates a state after the resin layer is cured. FIG. 3C illustrates a state in which the resin layer foams and is cured.
[FIG. 4] FIG. 4 is a view of steps of electrodeposition coating of the car panel of FIG. 2, and includes an enlarged view of a part of the step.
[FIG. 5] FIG. 5 is a view showing an exemplary variation of the reinforcement sheet of the first embodiment (in which a plurality of through holes is formed only in the central region).
[FIG. 6] FIG. 6 is a view showing an exemplary variation of the reinforcement sheet of the first embodiment (in which a plurality of through holes is formed in the central region and peripheral region).
[FIG. 7] FIG. 7 is a view showing an exemplary variation of the reinforcement sheet of the first embodiment (of which outer shape is circular).
[FIG. 8] FIG. 8 is a view showing an exemplary variation of the reinforcement sheet of the first embodiment (of which outer shape is a semicircular arc).
[FIG. 9] FIG. 9A and FIG. 9B illustrate a reinforcement sheet of a second embodiment of the present invention. FIG. 9A is a plan view. FIG. 9B is a cross-sectional view taken along line A-A of FIG. 9A.
[FIG. 10] FIG. 10 is a view showing an exemplary variation of the reinforcement sheet of the second embodiment (of which outer shape is circular).
[FIG. 11] FIG. 11 is a view showing an exemplary variation of the reinforcement sheet of the second embodiment (of which outer shape is a semicircular arc).
[FIG. 12] FIG. 12A and FIG. 12B are plan views of the reinforcement sheets used in the embodiments. FIG. 12A illustrates the reinforcement sheet used in Example 1. FIG. 12B illustrates the reinforcement sheet used in Example 2.
[FIG. 13] FIG. 13A and FIG. 13B are plan views of the reinforcement sheets used in Comparative Examples. FIG. 13A illustrates the reinforcement sheet used in Comparative Example 1. FIG. 13B illustrates the reinforcement sheet used in Comparative Example 2.
[FIG. 14] FIG. 14A and FIG. 14B are schematic views when a strain test is carried out. FIG. 14A is a perspective view. FIG. 14B is a bottom view.
[FIG. 15] FIG. 15 is a view showing electrodeposition coating of a car panel structure using a reinforcement sheet as reference.

### DESCRIPTION OF THE EMBODIMENTS

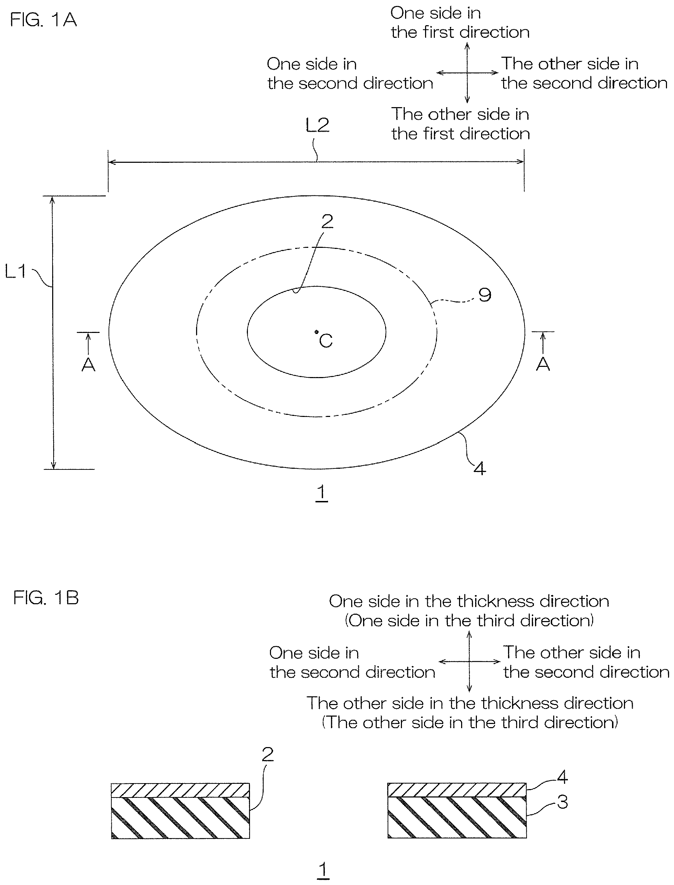

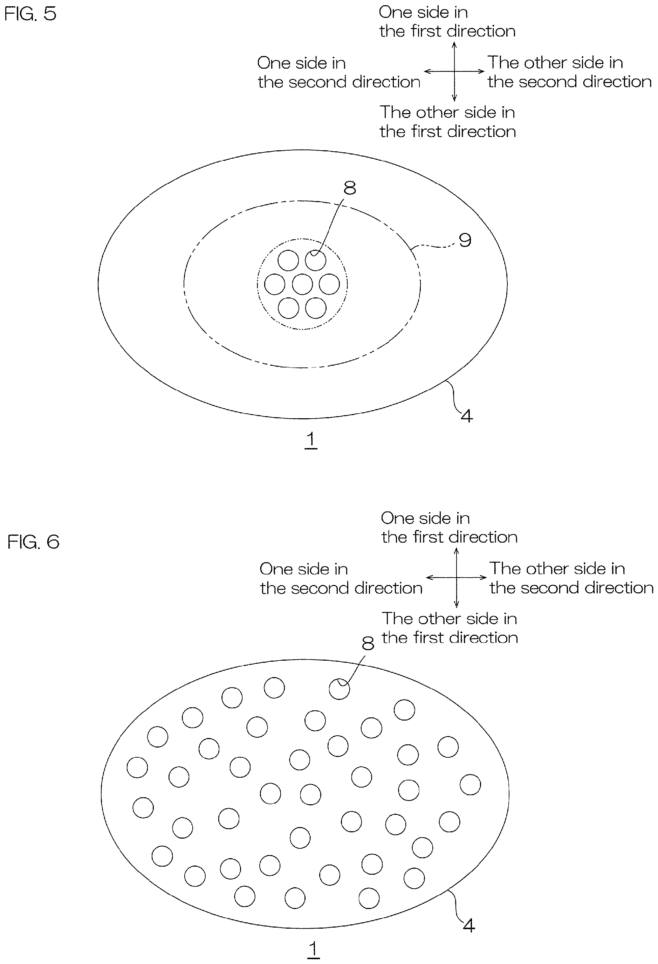

The upper-lower direction of the paper sheet of FIG. 1A is a first direction. The upper side of the paper sheet is one side in the first direction. The lower side of the paper sheet is the other side in the first direction. The left-right direction of the paper sheet of FIG. 1A is a second direction (orthogonal to the first direction). The left side of the paper sheet is one side in the second direction. The lower side of the paper sheet is the other side in the second direction. The thickness direction of the paper sheet of FIG. 1A is a third direction (orthogonal to the first direction and the second direction). The front side of the paper sheet is one side in the third direction (one side in the thickness direction). The back side of the paper sheet is the other side in the third direction (the other side in the thickness direction). FIG. 5 to FIG. 13B are in accordance with the directions of FIG. 1A.

### <First embodiment>

### 1. Reinforcement sheet

A reinforcement sheet 1 that is an embodiment of the first embodiment of the present invention has, as illustrated in FIG. 1A, a sheet shape extending in the surface directions (the first direction and the second direction).

The reinforcement sheet 1 has an approximately elliptical outer shape elongated in the second direction, when viewed in the thickness direction (in a plan view).

That is, an outer circumferential edge of the outer shape on one side in the first direction (specifically, the half of the outer circumferential edge on one side in the first direction) has a curved shape (a convex shape) protruding toward one side in the first direction.
Further, an outer circumferential edge on the other side in the first direction (specifically, the half of the outer circumferential edge on the other side in the first direction) has a curved shape protruding toward the other side in the first direction.

Similarly, an outer circumferential edge on one side in the second direction (specifically, the half of the outer circumferential edge on the one side in the second direction) has a curved shape protruding toward the one side in the second direction. Further, an outer circumferential edge on the other side in the second direction (specifically, the half of the outer circumferential edge on the other side in the second direction) has a curved shape protruding toward the other side in the second direction.

The reinforcement sheet 1 is symmetrical in the first direction (symmetrical in the upper-lower direction on the paper sheet of FIG. 1A) and is symmetrical in the second direction (symmetrical in the left-right direction on the paper sheet of FIG. 1A).

The reinforcement sheet 1 has a large through hole 2 (exemplary through hole) in a central region 9. The large through hole 2 penetrates the reinforcement sheet 1 in the thickness direction (the third direction) as illustrated in FIG. 1B. The large through hole 2 is included in the central region 9.

The large through hole 2 has an approximately elliptical shape elongated in the second direction. Specifically, the shape of the large through hole 2 is similar to the outer shape of the reinforcement sheet 1. When being projected in the thickness direction, the large through hole 2 overlaps a center C of the reinforcement sheet 1 and the center of the large through hole 2 coincides with the center C of the reinforcement sheet 1. In other words, the reinforcement sheet 1 has an elliptical ring shape.

The central region 9 includes the center C of the reinforcement sheet 1 as the center of the central region. The central region 9 is in a range having a shape (elliptical shape) similar to the outer shape of the reinforcement sheet 1 and having an area accounting for 50% (preferably, 30%) of the area of the entire outer shape of the reinforcement sheet 1 (see the phantom line in FIG. 1A. The center C of the reinforcement sheet 1 is the gravity center of the reinforcement sheet 1 on the assumption that the reinforcement sheet 1 is an even material.

The area of the outer shape of the reinforcement sheet 1 in a plan view (the area surrounded by the outer shape of the reinforcement sheet 1 and including the large through hole 2) is, for example, 25 cm² or more, preferably 200 cm² or more, more preferably 400 cm² or more and, for example, 6000 cm² or less, preferably 4500 cm² or less, more preferably 3200 cm² or less.

A length L1 of the reinforcement sheet 1 in the first direction is, for example, 5 cm or more, preferably 10 cm or more, more preferably 15 cm or more and, for example, 60 cm or less, preferably 50 cm or less, more preferably, 40 cm or less.

A length L2 of the reinforcement sheet 1 in the second direction is, for example, 5 cm or more, preferably 20 cm or more, more preferably 30 cm or more and, for example, 100 cm or less, preferably 90 cm or less, more preferably 80 cm or less.

The ratio of the area of the large through hole 2 in a plan view relative to the area of the outer shape of the reinforcement sheet 1 in a plan view is, for example, 5% or more, preferably 10% or more, more preferably 20% or more and, for example, 80% or less, preferably 70% or less, more preferably 40% or less.

The reinforcement sheet 1 includes, as illustrated in FIG. 1B, a resin layer 3 and a constraining layer 4 disposed on the one side of the resin layer 3 in the thickness direction. In other words, the reinforcement sheet 1 includes the resin layer 3 and the constraining layer 4 in the thickness direction.

The resin layer 3 is an adhesive layer for adhering the reinforcement sheet 1 to an adherend. The resin layer 3 has a sheet shape forming the outer shape of the reinforcement sheet 1 and extending in the first direction and the second direction.

The resin layer 3 has thermosetting properties. In other words, the resin layer 3 is a thermosetting resin layer. Thus, the reinforcement sheet 1 is surely adhered and firmly fixed to the metal panel (adherend).

The resin layer 3 is preferably an elastomer layer. In other words, the resin layer 3 is preferably a thermosetting elastic resin layer. Thus, the strain of the metal panel is even more suppressed.

The resin layer 3 is formed of a thermosetting resin composition containing thermosetting resin, preferably, a thermosetting resin composition containing thermosetting resin and rubber.

Examples of the thermosetting resin include epoxy resin. Examples of the epoxy resin include bisphenol type epoxy resins (such as bisphenol A type epoxy resin), novolak type epoxy resins (such as phenol novolak type epoxy resin), aromatic epoxy resins such as naphthalene type epoxy resin, nitrogen-containing heterocyclic epoxy resins such as triepoxy propyl isocyanurate resin, aliphatic epoxy resins, cyclo aliphatic epoxy resins (such as dicyclo type epoxy resin), glycidyl ether epoxy resin, glycidyl ester epoxy resin, and glycidyl amine epoxy resins. Preferably, bisphenol type epoxy resins are used.

Examples of the rubber include styrene-butadiene rubber (SBR), acrylonitrile-butadiene rubber (NBR), isoprene rubber, and polybutadiene rubber. Preferably, NBR and polybutadiene rubber are used in combination.

The mixing ratio of the rubber relative to 100 parts by mass of the thermosetting resin is, for example, 10 parts by mass or more, preferably 20 parts by mass or more, preferably 40 parts by mass or more and, for example, 500 parts by mass or less, preferably 300 parts by mass or less, preferably 100 parts by mass or less,.

Preferably, the resin layer 3 further contains a blowing agent. This allows the resin layer 3 to have foaming properties. In other words, the resin layer 3 is allowed to be a foamable thermosetting elastic resin layer. Thus, the resin layer 3 foams by heating, thereby increasing the thickness of the resin layer 3 and further improving the bending strength of the reinforcement sheet 1.

The blowing agent is a thermally blowing agent that foams by heating. Examples of the blowing agent include an inorganic blowing agent and an organic blowing agent.

Examples of the inorganic blowing agent include ammonium carbonate, ammonium hydrogen carbonate, sodium hydrogen carbonate, ammonium nitrite, sodium borohydride, and azides.

Examples of the organic blowing agent include an N-nitroso compound (N,N'-dinitrosopentamethylenetetramine, etc.), an azoic compound (e.g. azobis isobutyronitrile, etc.), alkane fluoride (e.g. trichloromonofluoromethane, etc.), a hydrazine compound (e.g. 4,4'-oxybis (benzene sulfonyl hydrazide), etc.), allylbis (sulfonyl hydrazide), etc.), a semicarbazide compound (e.g. p-toluylenesulfonyl semicarbazide, etc.), and a triazole compound (e.g. 5-morphoryl-1,2,3,4-thiatriazole, etc.). Preferably, 4,4'-oxybis (benzene sulfonyl hydrazide) (OBSH) is used.

The mixing ratio of the blowing agent relative to 100 parts by mass of the thermosetting resin is, for example, 0.1 parts by mass or more, preferably 0.5 parts by mass or more and, for example, 20 parts by mass or less, preferably 5 parts by mass or less.

Further, in addition to the components cited above, known additives such as a tackifier, a filler, an epoxy resin curing agent, a vulcanizing agent, a vulcanization accelerator, a pigment, and a thixotropic agent can be added to the thermosetting resin composition.

The thickness of the resin layer 3 (before being cured) is, for example, 0.1 mm or more, preferably 0.5 mm or more and, for example, 15 mm or less, preferably 9 mm or less.

The constraining layer 4 is a layer for constraining the resin layer 3 to give the resin layer 3 toughness and improve the strength. The constraining layer 4 is laminated on the upper surface of the resin layer 3. The constraining layer 4 is formed into a sheet forming the outer shape of the reinforcement sheet 1. Specifically, the constraining layer 4 has the same shape as that of the resin layer 3 in a plan view. In other words, in the thickness direction, an outer peripheral edge of the constraining layer 4 is flush with an outer peripheral edge of the resin layer 3. Meanwhile, in the thickness direction, an inner peripheral edge of the constraining layer 4 (a peripheral edge of the large through hole 2) is flush with an inner peripheral edge of the resin layer 3.

Examples of the constraining layer 4 include fiber cloth and metal foil. Preferably, fiber cloth is used.

Examples of the fiber cloth include glass cloth and carbon fiber cloth. Examples thereof include resin-impregnated cloth that is fiber cloth filled with synthetic resin by impregnation process and cover-laminated cloth that is fiber cloth on which a synthetic resin cover is laminated.

Examples of the metal foil include aluminum foil and steel foil.

The linear temperature expansion coefficient of the constraining layer 4 is for example, 0.5 × 10⁻⁶ or more, preferably 2 × 10⁻⁶ or more and, for example, 30 × 10⁻⁶ or less, preferably 25 × 10⁻⁶ or less.

The thickness of the constraining layer 4 is, for example, 0.01 mm or more, preferably 0.05 mm or more and, for example, 3 mm or less, preferably 1 mm or less.

To produce the reinforcement sheet 1, a laminate of the constraining layer 4 and the resin layer 3 is made, and the outer shape of the laminate is processed and through holes are formed by punching, Thomson die cutting processing, or laser processing. The laminate is produced by the method described, for example, in Japanese Unexamined Patent Publication No. 2010-56112.

### 2. Method of using the reinforcement sheet.

The reinforcement sheet 1 is used to reinforce a metal panel. Specifically, the reinforcement sheet 1 is used to reinforce, for example, a transportation vehicle panel (component) of a transportation vehicle such as a car, a railway vehicle, a ship, or an airplane, or an attached equipment panel of an attached structure such as a door for home.

Examples of the transportation vehicle panel include a door panel, roof panel, fender, hood, and bumper for a car.

The transportation vehicle panels and attached equipment panels are composed of metal panels. Examples of the metal panels include an aluminum plate, a steel plate, a copper plate, a zinc plate, and a brass plate. For weight saving, preferably, an aluminum plate is used.

The thickness of the metal panel is, for example, 2 mm or less, preferably 1.5 mm or less and, for example, 0.1 mm or more.

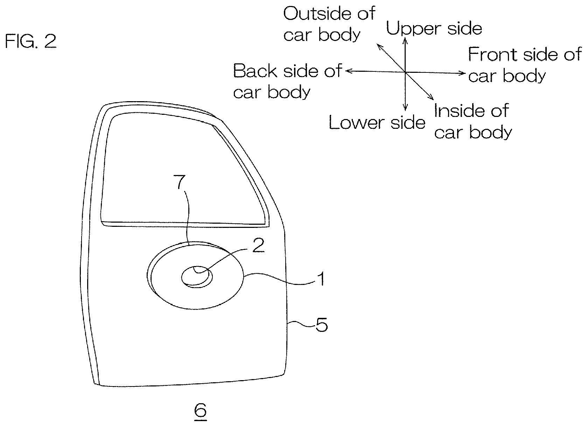

As an embodiment of the method of reinforcing a metal panel using the reinforcement sheet 1, a method of reinforcing a door panel 5 of a car will be described with reference to FIG. 2 to FIG. 3C.

First, as illustrated in FIG. 2 to FIG. 3A, a reinforcement sheet 1 is disposed on a side surface of a central portion of the door panel 5 on the inside of the car body. Specifically, a resin layer 3 of the reinforcement sheet 1 is brought into contact with the door panel 5. At the time, one side of the reinforcement sheet 1 in the first direction corresponds with an upper side of the door panel 5.

In this manner, a car panel structure 6 (an example of the reinforcement structure) including the reinforcement sheet 1 and the door panel 5 is produced.

Next, the car panel structure 6 is heated and cured.

The heating temperature is, for example, 140°C or more, preferably, 160°C or more and, for example, 220°C or less, preferably 200°C or less.

The heating time is, for example, 5 minutes or more, preferably 10 minutes or more and, for example, 60 minutes or less, preferably 30 minutes or less.

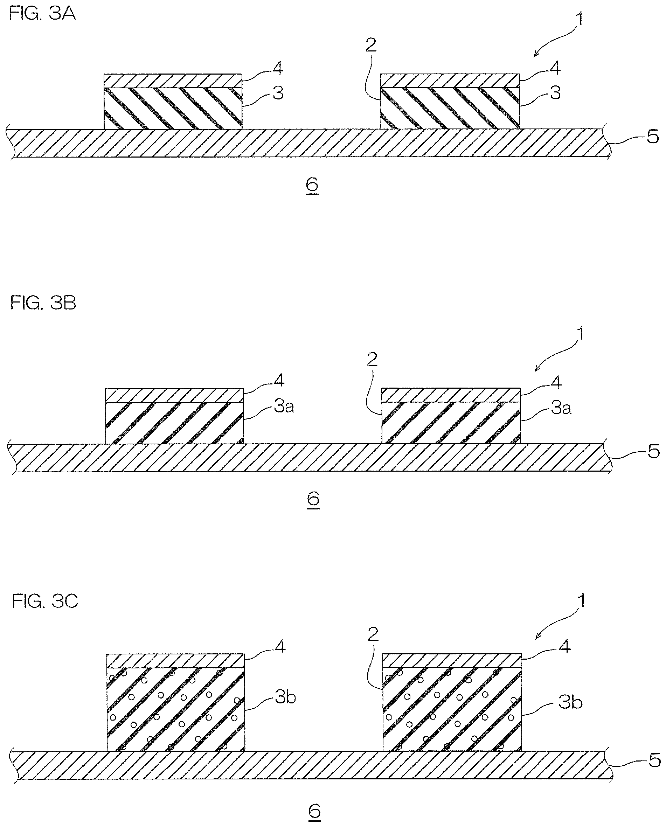

In this manner, as illustrated in FIG 3B, the resin layer 3 is cured and becomes a cured resin layer 3a (an example of the resin layer). Then, the reinforcement sheet 1 is fixed to the door panel 5. As a result, the door panel 5 is surely reinforced by the reinforcement sheet 1.

When the resin layer 3 includes a blowing agent, as illustrated in FIG 3C, the resin layer 3 foams and becomes a cured foaming resin layer 3b (an example of the resin layer). In this case, the thickness of the reinforcement sheet 1 increases and thus the bending strength of the reinforcement sheet 1 improves. As a result, the door panel 5 is more strongly reinforced by the reinforcement sheet 1.

The thickness of the cured resin layer 3 (3a or 3b) is, for example, 0.3 mm or more, preferably 1.5 mm or more and, for example, 15 mm or less, preferably 9 mm or less.

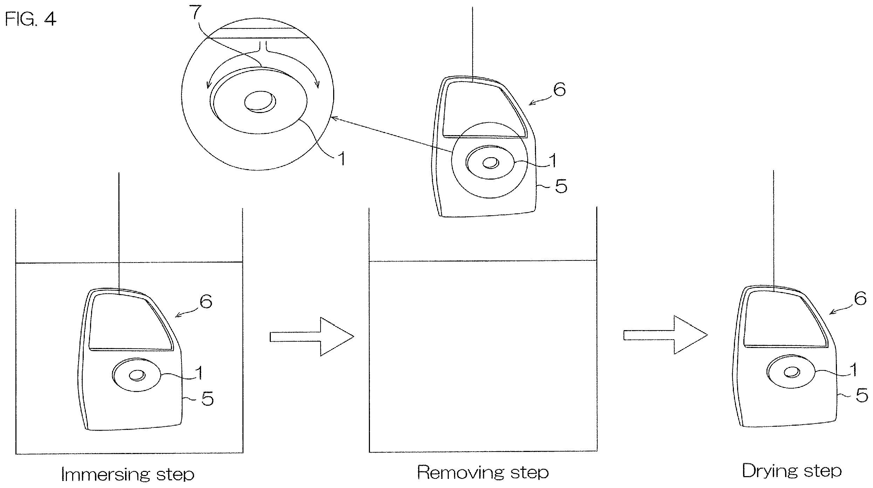

The car panel structure 6 produced in this manner is subject to electrodeposition coating. Specifically, as illustrated in FIG. 4, the car panel structure 6 is immersed in an electrodeposition solution, removed, and dried.

In the electrodeposition coating, when the car panel structure 6 is removed from the electrodeposition solution, the excessive electrodeposition solution on the entire surface of the car panel structure 6 flows down to the lower side. A part of the flowing electrodeposition solution reaches the stepped portion between the reinforcement sheet 1 and the door panel 5, specifically, an upper surface 7 of the reinforcement sheet 1. As arrows of the enlarged view of FIG. 4 show, the electrodeposition solution flows down along the shape of the outer circumferential edge (the upper side of the elliptical shape) of the reinforcement sheet 1 in the front-back direction (to the front side or the back side) of the car body and to the lower side. In other words, the collection of the solution on the upper surface 7 (one edge surface in the first direction) of the reinforcement sheet 1 can be suppressed. In this manner, the entire surface of the car panel structure 6 is evenly coated.

The outer circumferential edge on the one side of the reinforcement sheet 1 in the first direction has a curved shape protruding to the one side in the first direction. Thus, when being stuck onto a metal panel such as the door panel 5, the reinforcement sheet 1 suppresses the strain of the metal panel and reinforces the metal panel.

Further, when the one side of the reinforcement sheet 1 in the first direction is turned upward, and the reinforcement sheet 1 is stuck onto the metal panel, and then electrodeposition coating is carried out, the electrodeposition solution on the upper surface 7 (the one edge surface in the first direction) of the reinforcement sheet 1 flows down toward the other side in the first direction in the metal panel structure such as a car panel structure. Thus, the collection of the solution on the upper surface 7 (the edge surface in the first direction) can be suppressed. Therefore, the reinforcement sheet 1 is suitable for electrodeposition coating.

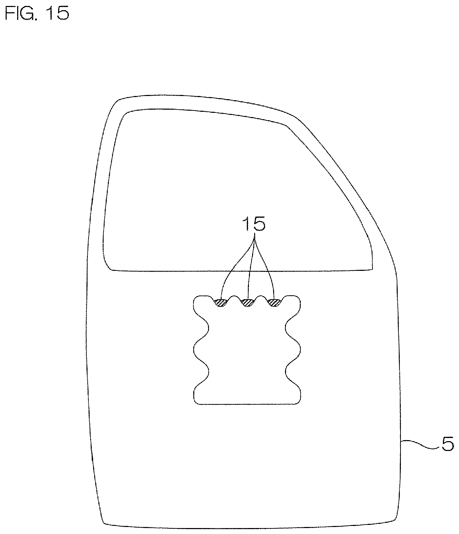

In the reinforcement sheet illustrated in FIG. 15, the outer circumferential edge of the one side in the first direction has a plurality of curve shapes (wave shapes) protruding toward the side. When the side in the first direction is turned upward, and the reinforcement sheet is stuck onto the metal panel, and then electrodeposition coating is carried out, the electrodeposition solution on the upper surface 7 of the reinforcement sheet 1 becomes a collected solution 15 and is held between the curved shapes. This makes it difficult to carry out the coating evenly.

Further, as for the transportation vehicle structure such as the car panel structure 6 using the reinforcement sheet 1, the strain is suppressed and the strength is improved. Further, the transportation vehicle structure is suitable for electrodeposition coating.

### 3. Variations

With reference to FIG. 5 to FIG. 8, the variations of the reinforcement sheet 1 of the first embodiment will be described. For the variations, the same members as the above-described first embodiment are given the same numerical references and the descriptions are omitted. The embodiments and variations can appropriately be combined.

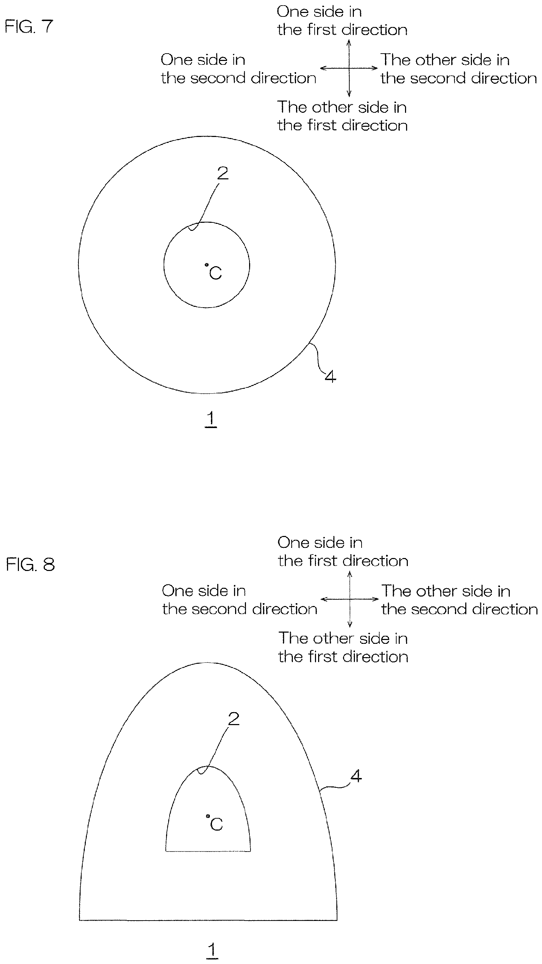

(1) In the embodiment illustrated in FIG. 1A, the reinforcement sheet 1 has a large through hole 2. However, the reinforcement sheet 1 can has a plurality of small through holes 8 (an example of the through hole) as illustrated in FIG. 5 and FIG. 6.
   In the embodiment of FIG. 5, a plurality of (seven) small through holes 8 is formed in only the central region 9 (in the phantom line).
   In the embodiment of FIG. 6, a plurality of (40) small through holes 8 is formed in the central region 9 and the outer periphery.
   The number of the small through holes 8 is not limited and can appropriately be determined. The area of the small through holes 8 is not limited and can appropriately be determined. Preferably, the total area of the small through holes 8 is approximately the same as the area of the large through hole 2.
   The embodiments of FIG. 5 and FIG. 6 have the same functions and effects as those of FIG. 1A. For production adequacy (workability), preferably, the embodiment illustrated in FIG. 1A is used. Alternatively, for suppressing the strain of the end of the reinforcement sheet 1, the embodiment illustrated in FIG. 6 is used.
(2) In the embodiment illustrated in FIG. 1A, the large through hole 2 has an elliptical shape similar to the reinforcement sheet 1. However, for example, although not illustrated, the large through hole 2 can have a circular shape or a rectangular shape.
   Further, in the embodiment illustrated in FIG. 1A, the center of the large through hole 2 coincides with the center C of the reinforcement sheet 1 (the concentric circle). However, for example, although not illustrated, the center of the large through hole 2 does not necessarily coincide with the center C of the reinforcement sheet 1 (may be eccentric).
   This embodiment has the same functions and effects as those of FIG. 1A. For evenly suppressing the strain, preferably, the large through hole 2 has an approximately elliptical shape and the concentric circle.
(3) In the embodiment illustrated in FIG. 1A, the reinforcement sheet 1 has an approximately elliptical outer shape. However, for example, as illustrated in FIG. 7, the reinforcement sheet 1 can have an approximately circular outer shape. That is, the shape of the reinforcement sheet 1 of FIG. 1A is a curve made of a set of points at which the sum of the distances from two fixed points on the plane surface remains substantially constant and having a long diameter and a short diameter. On the other hand, the shape of the reinforcement sheet 1 of FIG. 7 is a curve made of a set of points at which the sum of the distances from a fixed point on the plane surface remains substantially constant.
   The large through hole 2 has an approximately circular shape. The shape is similar to the outer shape of the reinforcement sheet 1. In other words, the reinforcement sheet 1 of FIG. 7 has an annular shape.
   In the same manner as the embodiments of FIG. 5 and FIG. 6, the embodiment of FIG. 7 can include a plurality of small through holes 8 in place of a large through hole 2.
   The embodiment of FIG. 7 has the same functions and effects as those of the embodiment of FIG. 1A. Preferably, for suppressing the strain in the second direction, the embodiment of FIG. 1A is used.
(4) In the embodiment illustrated in FIG. 1A, the outer shape of the reinforcement sheet 1 is an approximately elliptical shape. However, for example, as illustrated in FIG. 8, the reinforcement sheet 1 can have an approximately semicircular arc shape in which only the one side in the first direction is curved.
   That is, in the outer shape, the outer circumferential edge on the one side in the first direction has a curved shape (the convex shape) protruding toward the one side in the first direction. On the other hand, the outer circumferential edge on the other side in the first direction (specifically, the half of the outer circumferential edge on the other side in the first direction) is a straight line shape extending in the second direction.
   The reinforcement sheet 1 of FIG. 8 is symmetrical in the second direction (on the paper sheet of FIG. 8, symmetrical in the left-right direction) and is asymmetrical in the first direction (on the paper sheet of FIG. 8, asymmetrical in the upper-lower direction).
   The large through hole 2 has an approximately semicircular arc shape. The shape is similar to the outer shape of the reinforcement sheet 1.
   In the same manner as the embodiments of FIG. 5 and FIG. 6, the embodiment of FIG. 8 can include a plurality of small through holes 8 in place of a large through hole 2.
   The embodiment of FIG. 8 has the same functions and effects as those of the embodiment of FIG. 1A. Preferably, for suppressing also the strain on the other side in the first direction, the embodiment of FIG. 1A is used.
(5) Although not illustrated, the reinforcement sheet 1 can include a separator on the other side of the resin layer 3 in the thickness direction.

### <Second embodiment>

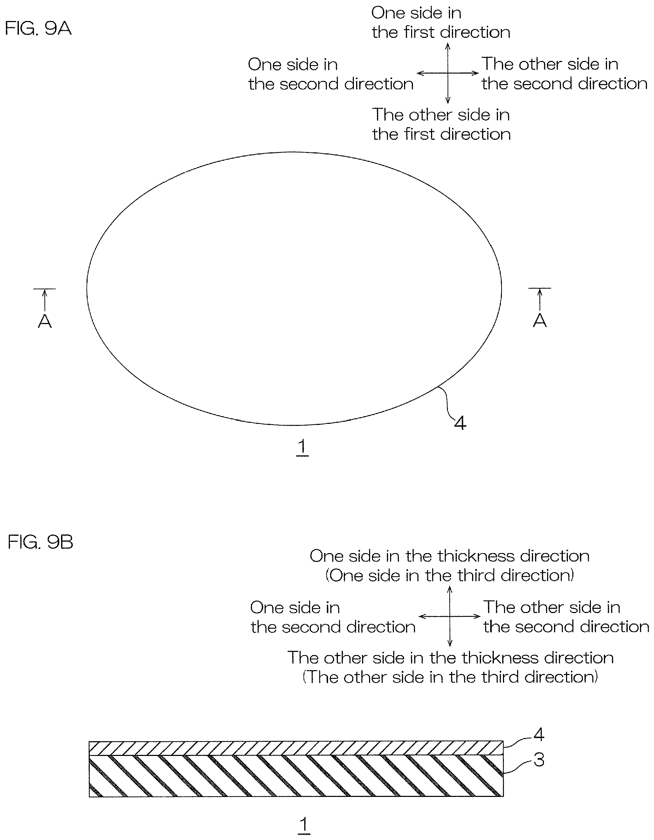

With reference to FIG. 9A to FIG. 11, a reinforcement sheet 1 of a second embodiment of the present invention will be described. In the second embodiment, the same members as those of the above-described first embodiment will be given the same numerical references and the descriptions will be omitted.

An embodiment of the reinforcement sheet 1 of the second embodiment, as illustrated in FIG. 9A and FIG. 9B, has an approximately elliptical shape and does not have a through hole. In other words, the inside range of the outer shape (elliptical shape) of the reinforcement sheet 1 has entirely an even thickness.

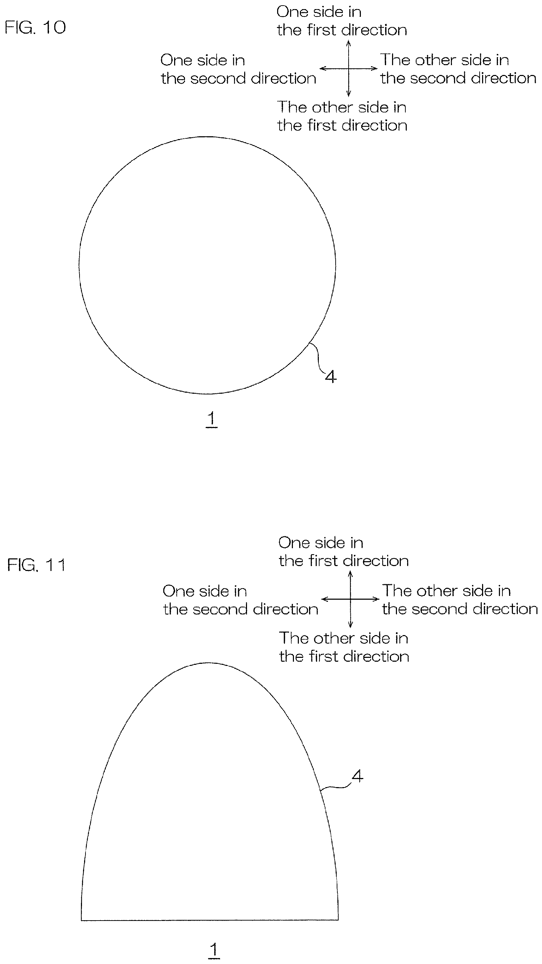

As illustrated in FIG. 10, the outer shape of the reinforcement sheet of the second embodiment can be an approximately circular shape. Alternatively, as illustrated in FIG. 11, the outer shape of the reinforcement sheet of the second embodiment can have an approximately semicircular arc shape in which only the one side in the first direction is curved.

Preferably, for more surely suppressing the strain, the reinforcement sheet 1 of the embodiment of FIG. 1A is used.

### Examples

Hereinafter, the present invention will be described in more detail with reference to Examples and Comparative Examples. However, the present invention is not limited to Examples and Comparative Examples. The specific numeral values used in the description below, such as mixing ratios (contents), physical property values, and parameters can be replaced with corresponding mixing ratios (contents), physical property values, parameters in the above-described "DESCRIPTION OF EMBODIMENTS", including the upper limit values (numeral values defined with "or less", and "less than") or the lower limit values (numeral values defined with "or more", and "more than").

### Example 1

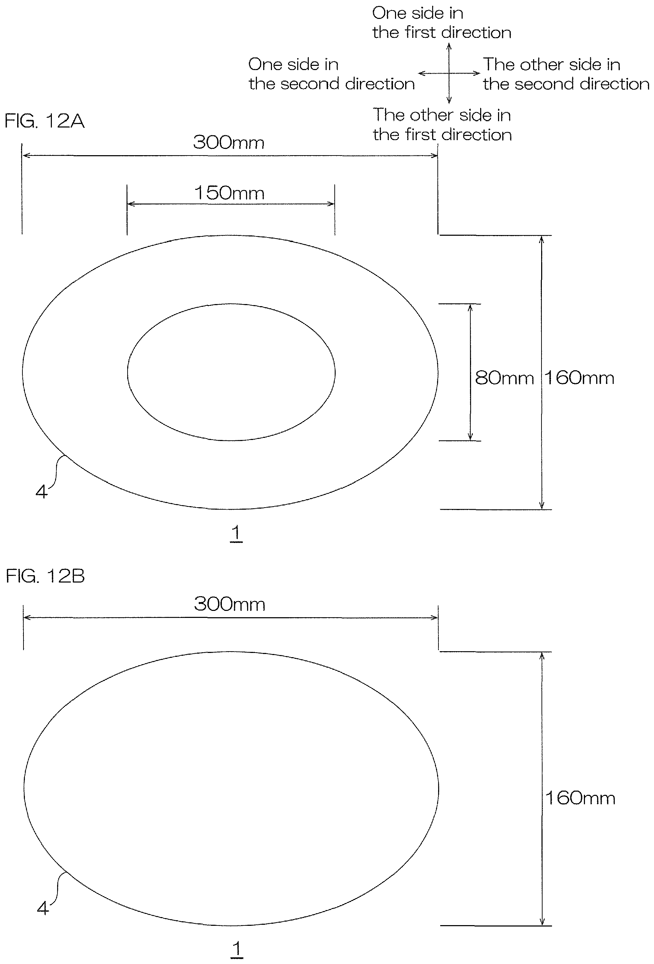

A foaming adhesive tape (foaming thermosetting elastic resin layer with a thickness of 0.6 mm) was adhered to an entirely surface of glass cloth (with a thickness of 0.2 mm), thereby producing a laminate. The outer shape of the laminate was cut to an elliptical shape and a through hole having an elliptical shape was formed in the central region of the laminate (see FIG. 12A). In this manner, a reinforcement sheet of Example 1 was produced.

The foaming thermosetting elastic resin layer is formed of the following materials.
- 80 parts by mass of a bisphenol type epoxy resin (manufactured by Nippon Steel & Sumikin Chemical Co., Ltd., "YD-134") • 20 parts by mass of a bisphenol type epoxy resin (manufactured by ADEKA Corporation, "EP-4080E") • 50 parts by mass of polybutadiene rubber (manufactured by Asahi Kasei chemicals, "Tufdene 2003")
- 10 parts by mass of acrylonitril butadiene rubber (manufactured by Zeon Corporation, "Nipol 1052J")
- 2 parts by mass of a blowing agent (manufactured by EIWA CHEMICAL IND. CO.,LTD., "N#10000S")
- 50 parts by mass of a tackifier (manufactured by Tosoh Corporation, petroleum resin, "Petrotack 90V")
- 50 parts by mass of a filler (manufactured by Maruo Calcium Co., Ltd., heavy calcium carbonates)
- 3 parts by mass of a curing agent (manufactured by NIPPON CARBIDE INDUSTRIES CO.,INC., dicyandiamide)
- 12 parts by mass of a vulcanizing agent (manufactured by Turumi Chemical Industry CO.,Ltd., "GOLDEN FLOWER" SULFUR POWDER")
- 6 parts by mass of a vulcanization accelerator (manufactured by Ouchi Shinko Chemical Industries Co. Ltd., "NOCCELER DM")

### Example 2

Except that a through hole having an elliptical shape was not formed, a reinforcement sheet of Example 2 was produced in the same manner as Example 1 (see FIG. 12B).

### Comparative Example 1

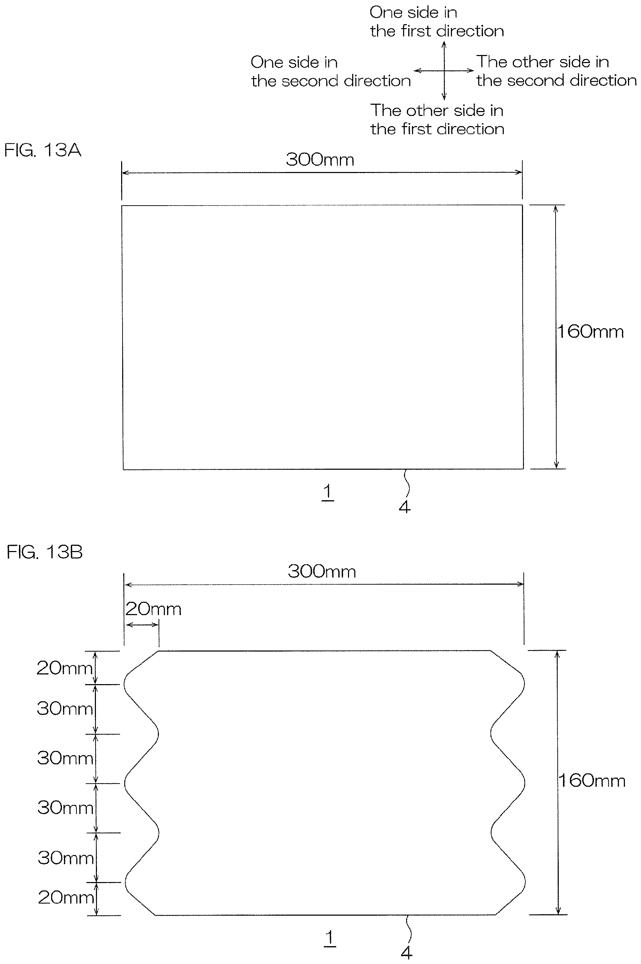

Except that the outer shape was processed as illustrated in FIG. 13A, a reinforcement sheet of Comparative Example 1 was produced in the same manner as Example 1.

### Comparative Example 2

Except that the outer shape was processed as illustrated in FIG. 13B, a reinforcement sheet of Comparative Example 2 was produced in the same manner as Example 1.

### (Strain test)

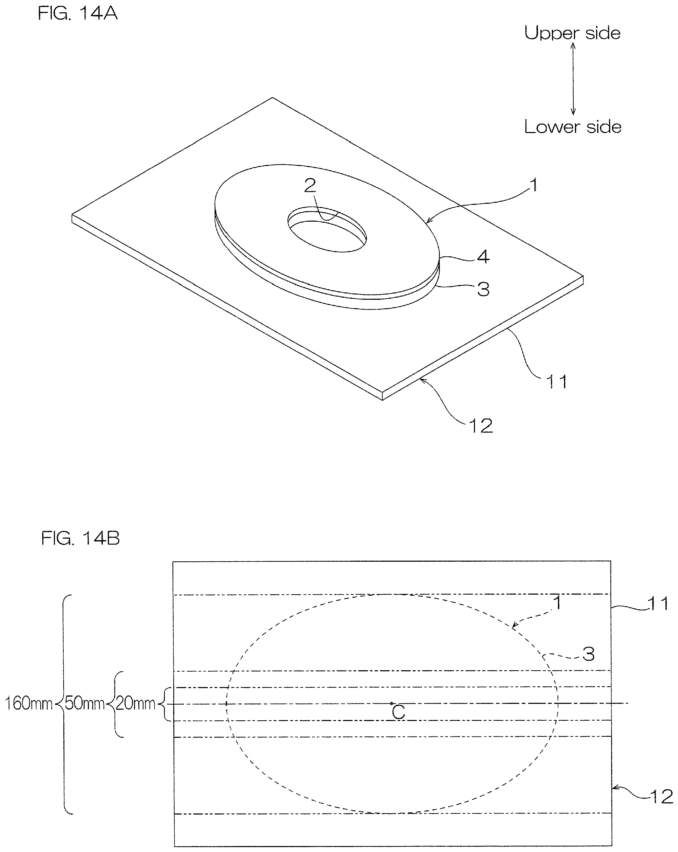

As illustrated in FIG. 14A and FIG. 14B, each of the reinforcement sheets of Examples and Comparative Examples was stuck onto the upper surface of the center of an aluminum panel 11 (with a thickness of 0.8 mm) in a plan view under an atmosphere of 20°C. In this manner, a metal panel structure 12 was produced.

At the time, using a laser displacement meter, the initial amount of displacement of the lower surface (opposite to the side on which the reinforcement sheet was adhered, see FIG. 14B) of the aluminum panel 11 was measured.

Next, the metal panel structure 12 was heated at 180°C for 20 minutes, thereby foaming and thermosetting the foaming thermosetting elastic resin layer. Thereafter, the metal panel structure 12 was cooled for 8 hours.

Thereafter, using the laser displacement meter, the amount of displacement of the lower surface of the aluminum panel 11 after being heated was measured.

The difference between the amount of displacement after heating and the initial amount of displacement was calculated and the maximum value was evaluated as the amount of strain. Each of the amounts of displacement was measured at the regions with widths in the upper-lower direction of 20 mm (the number of measurement lines were 11), of 50 mm (the number of measurement lines were 26), and of 160 mm (the number of measurement lines were 81) from the center of the metal panel structure 12 (the center C of the reinforcement sheet) in the upper-lower direction.

The results at the time are shown in Table 1. As clearly shown in Table 1, the amount of strain at each of the regions in Examples is lower than that in Comparative Examples. This shows that Examples more surely suppressed the strain.

**Table 1**

| | | Example 1 | Example 2 | Comparative Example 1 | Comparative Example 2 |
|---|---|---|---|---|---|
| Strain amount (mm) | Width 20mm | 5.3 | 6.5 | 8.8 | 8.5 |
| | Width 50mm | 5.3 | 6.5 | 8.8 | 8.5 |
| | Width 160mm | 5.4 | 6.2 | 8.7 | 8.4 |

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

The reinforcement sheet is used to reinforce, for example, a metal panel of a transportation vehicle such as a car, a railway vehicle, a ship, or an airplane, or of an attached structure such as a door for home.

### Description of Reference Numerals

- 1: reinforcement sheet
- 2: large through hole
- 3: resin layer
- 4: constraining layer
- 5: door panel
- 6: car panel structure
- 8: small through hole
- 9: central region

## Claims

1. A reinforcement sheet stuck onto a metal panel and comprising:
a resin layer; and
a constraining layer disposed on one side of the resin layer in a thickness direction,
the reinforcement sheet extending in a first direction and a second direction orthogonal to the first direction, wherein an outer circumferential edge on one side of the reinforcement sheet in the first direction has a curved shape protruding toward the one side in the first direction.

2. The reinforcement sheet according to Claim 1, having an approximately elliptical shape or an approximately circular shape.

3. The reinforcement sheet according to Claim 2, having an approximately elliptical shape.

4. The reinforcement sheet according to Claim 1, having a through hole penetrating in the thickness direction.

5. The reinforcement sheet according to Claim 4, having a through hole overlapping a center when being projected in the thickness direction.

6. The reinforcement sheet according to Claim 4, having a plurality of the through holes.

7. The reinforcement sheet according to Claim 6, wherein the through holes are formed only in a central region.

8. A reinforcement structure comprising:
the reinforcement sheet according to Claim 1; and
a metal panel disposed while being in contact with the resin layer of the reinforcement sheet.
